# EUROPEAN PATENT SPECIFICATION

(11) **EP 3 764 216 B1**
(45) Date of publication and mention of the grant of the patent: **09.11.2022**
(21) Application number: 20158572.6
(22) Date of filing: 20.02.2020
(51) Int. Cl.: G06F 3/14, G09G 5/00, H04N 5/44

(54) **DISPLAY DEVICE AND CONTROL METHOD THEREOF**
ANZEIGEVORRICHTUNG UND STEUERUNGSVERFAHREN DAFÜR
DISPOSITIF D'AFFICHAGE ET SON PROCÉDÉ DE COMMANDE

(30) Priority: 08.07.2019 KR 20190082029
(43) Date of publication of application: 13.01.2021
(73) Proprietor: Samsung Electronics Co., Ltd., Gyeonggi-do 16677 (KR)
(72) Inventor: LIM, Daesung, 16677 Gyeonggi-do (KR)
(74) Representative: Taor, Simon Edward William

(56) References cited:
- EP-A1- 1 720 352
- EP-A1- 3 203 728
- US-A- 6 157 365
- US-A1- 2007 222 798
- US-A1- 2010 220 105
- US-A1- 2014 306 957
- US-A1- 2014 313 231
- US-A1- 2017 140 736
- US-A1- 2019 043 153

## Description

### BACKGROUND

### Field

Apparatuses and methods consistent with the disclosure relate to a display device and a control method thereof, and more particularly, to a display device for providing a graphic image at a high resolution and a control method thereof.

### Description of the Related Art

The document US-A-2007222798 discloses an information reproduction apparatus and an information reproduction method that include executing graphics processing including blend processing of superimposing respective planes of at least video data, picture data and graphics data, and performing control to assure that data in a region except a specific region surrounding a part superimposed on the video data or the picture data in the graphics data is not used for the blend processing but data in the specific region is used for the blend processing when the video data and the picture data vary with time and the graphics data does not vary with time.

In accordance with the development of electronic technology, various types of electronic devices have been developed and spread. In particular, display devices used in various places such as homes, offices, public places, and the like have been continuously developed in recent years.

In recent years, the demand for high resolution image services has increased greatly. Due to such a demand, the resolution of the display device is increasing. However, in order to match the current performance of a graphics processing unit (GPU), a graphic image is processed at the resolution lower than that of the display device, a size of the graphic image is up-scaled, and the graphic image is mixed with a video content. As a result, there is a problem that a resolution deterioration and an image quality deterioration of the graphic image occur.

### SUMMARY OF THE INVENTION

According to an aspect, there is provided a display device as set out in claim 1. Optional features are set out in claims 2 to 10.

According to another aspect, there is provided a control method of a display device as set out in claim 11. Optional features are set out in claims 12 to 14.

### BRIEF DESCRIPTION OF THE DRAWING FIGURES

The above and/or other aspects of the disclosure will be more apparent by describing certain embodiments of the present disclosure with reference to the accompanying drawings, in which:
FIGS. 1A and 1B are diagrams illustrating implementations of a display device according to an embodiment of the disclosure.
FIGS. 2A and 2B are block diagrams illustrating configurations of the display device according to an embodiment of the disclosure.
FIGS. 3A and 3B are diagrams illustrating implementations of a processor according to diverse embodiments of the disclosure.
FIG. 4 is a diagram illustrating implementation of a processor according to another embodiment of the disclosure.
FIGS. 5A and 5B are diagrams illustrating a processing sequence according to diverse embodiments of the disclosure.
FIGS. 6A, 6B, 6C and 6D are diagrams illustrating a processing sequence according to diverse embodiments of the disclosure.
FIG. 7 is a diagram illustrating one implementation of a display device according to another embodiment of the disclosure.
FIG. 8 is a flowchart illustrating a control method of a display device according to an embodiment of the disclosure.

### DETAILED DESCRIPTION OF THE EXEMPLARY EMBODIMENTS

The disclosure provides a display device for providing a graphic image displayed together with a high resolution video content at high resolution, and a control method thereof.

Hereinafter, the disclosure will be described in detail with reference to the accompanying drawings.

After terms used in the specification are briefly described, the disclosure will be described in detail.

General terms that are currently widely used were selected as terms used in embodiments of the disclosure in consideration of functions in the disclosure, but may be changed depending on the intention of those skilled in the art or a judicial precedent, an emergence of a new technique, and the like. In addition, in a specific case, terms arbitrarily chosen by an applicant may exist. In this case, the meaning of such terms will be mentioned in detail in a corresponding description portion of the disclosure. Therefore, the terms used in the disclosure should be defined on the basis of the meaning of the terms and the contents throughout the disclosure rather than simple names of the terms.

Terms 'first', 'second', and the like may be used to describe various components, but the components should not be limited by the terms. The terms are used only to distinguish one component from another component.

Singular forms are intended to include plural forms unless the context clearly indicates otherwise. It should be further understood that terms "include" or "constituted" used in the application specify the presence of features, numerals, steps, operations, components, parts mentioned in the specification, or combinations thereof, but do not preclude the presence or addition of one or more other features, numerals, steps, operations, components, parts, or combinations thereof.

The expression "at least one of A or B" should be understood to represent either "A" or "B" or any one of "A and B".

In the disclosure, a 'module' or a '~er/~or' may perform at least one function or operation, and be implemented by hardware or software or be implemented by a combination of hardware and software. In addition, a plurality of 'modules' or a plurality of '~ers/ors' may be integrated in at least one module and be implemented as at least one processor (not illustrated) except for a 'module' or an '~er/or' that needs to be implemented by specific hardware.

Hereinafter, embodiments of the disclosure will be described in detail with reference to the accompanying drawings so that those skilled in the art to which the disclosure pertains may easily practice the disclosure. However, the disclosure may be implemented in various different forms and is not limited to the embodiments described herein. In addition, in the drawings, portions unrelated to the description will be omitted to obviously describe the disclosure, and similar portions will be denoted by similar reference numerals throughout the specification.

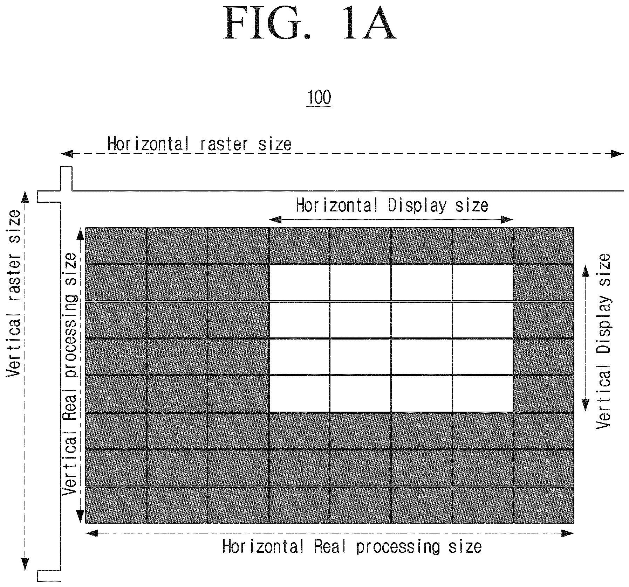

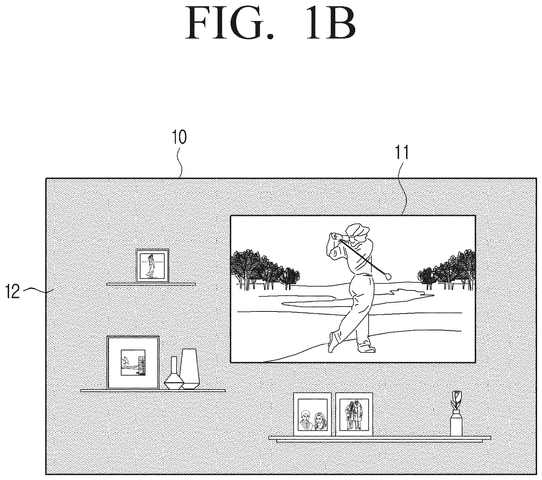

FIGS. 1A and 1B are diagrams illustrating implementations of a display device according to an embodiment of the disclosure.

A display device 100 may be implemented as a television (TV), but is not limited thereto and may be applied without limitation as long as it has a display function such as a video wall, a large format display (LFD), a digital signage, a digital information display (DID), a projector display, or the like.

The display device 100 may receive various compressed images and/or images of various resolutions. For example, the display device 100 may receive an image in a compressed form in a moving picture expert group (MPEG) (e.g., MP2, MP4, MP7, etc.), a joint photographic coding experts group (JPEG), an advanced video coding (AVC), H.264, H.265, a high efficiency video codec (HEVC), and the like. Alternatively, the display device 100 may receive any one of a standard definition (SD) image, a high definition (HD) image, a full HD image, and an ultra HD image.

In addition, the display device 100 may perform various image processing based on characteristics of the received image. Here, the image may be a digital image. The digital image refers to an image obtained by transforming an analog image through a process of sampling, quantization, and coding. The digital image may be distinguished by arranging each pixel in a two-dimensional form using coordinates or matrix positions. The image processing may be a digital image processing including at least one of image enhancement, image restoration, image transformation, image analysis, image understanding, or image compression.

According to one example, the display device 100 may be implemented in the form of a video wall as illustrated in FIG. 1A. For example, the video wall may be implemented in the form of physically connecting a plurality of display modules. Here, each display module may include a self-light emitting element including at least one of a light emitting diode (LED), a micro LED, or a mini LED. For example, the display module may be implemented as an LED module in which each of the plurality of pixels is implemented as an LED pixel, or an LED cabinet to which a plurality of LED modules are connected, but is not limited thereto.

In this case, resolution of the display device 100 may be changed according to a number of the plurality of display modules constituting the display device 100. As an example, in a case in which each of the display modules has the resolution of 1K, when the display modules are connected in the form of 8x8, a high resolution display having the resolution of 8K may be implemented. However, the display is not limited thereto and may support various resolutions or aspect ratios such as 7x7, 6x6, and 8x4 by assembling the display modules according to a user's request. In this case, one display module may have various sizes such as 960x540(1K), 480x270(0.5K), 640x480, and the like. For example, the video wall is a structure in which the plurality of display modules are combined to form a large display such as walls of various sizes, and may be implemented with a bezel minimized or absent to minimize discontinuity at a point connected between modules.

According to an embodiment, only a portion of the entire region of the video wall may be used for playing the video content, and a background image may be provided to the remaining region. As an example, the position and/or size of the region used for playing the content may be changed based on a user selection command, a type of image content, and the like. For example, the display device 100 may detect a user's position, a viewing distance, and the like by using a sensor to provide the video content to a region of an appropriate size at an appropriate position.

In the case in which the display device 100 is implemented as the video wall, the display device 100 may output content 10 including a video region 11 including the video content and a background region 12 including the background image. However, in a case in which the graphic image provided as the background image has high resolution (e.g., 8K), there is a problem that a current performance of the GPU is difficult to maintain and output the high resolution, and in this case, there is a problem that a resolution deterioration and/or an image quality deterioration of the background region occur.

Accordingly, hereinafter, diverse embodiments in which a high resolution background image may be processed without loss of resolution and provided will be described.

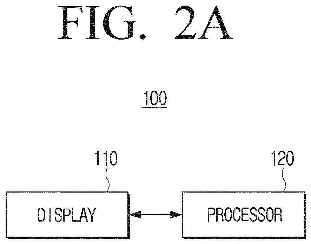

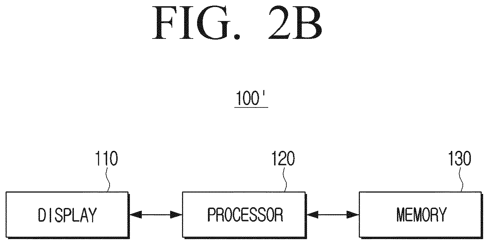

FIGS. 2A and 2B are block diagrams illustrating configurations of the display device according to an embodiment of the disclosure.

Referring to FIG. 2A, the display device 100 includes a display 110 and a processor 120.

The display 110 may be implemented as a display including a self-light emitting element, and a display including a non-light emitting element and a backlight. For example, the display 110 may be implemented as various forms of displays such as a liquid crystal display (LCD), an organic light emitting diode (OLED) display, a light-emitting diode (LED), a micro LED, a mini LED, a plasma display panel (PDP), a quantum dot (QD) display, a quantum dot light-emitting diodes (QLED), and the like. The display 110 may also include a driving circuit, a backlight unit, and the like which may be implemented in the form of an a-si thin film transistor (TFT), a low temperature poly silicon (LTPS) TFT, and an organic TFT (OTFT). Meanwhile, the display 110 may be implemented as a touch screen combined with a touch sensor, a flexible display, a rollable display, a three-dimensional (3D) display, a display in which a plurality of display modules are physically connected to each other, and the like.

The processor 120 controls an overall operation of the display device 100.

According to an embodiment, the processor 120 may be implemented as a digital signal processor (DSP), a microprocessor, a graphics processing unit (GPU), an artificial intelligence (AI) processor, or a time controller (TCON) for processing a digital image signal. However, the processor 120 is not limited thereto, but may include one or more of a central processing unit (CPU), a micro controller unit (MCU), a micro processing unit (MPU), a controller, an application main processor (AP), a communication processor (CP), and an ARM processor, or may be defined as the corresponding term. In addition, the processor 120 may also be implemented as a system-on-chip (SoC) or a large scale integration (LSI) in which a processing algorithm is embedded, and may also be implemented in the form of a field programmable gate array (FPGA).

The processor 120 performs image processing on an input image to obtain an output image. Here, the input image and the output image may be images having standard definition (SD) high definition (HD), full HD, ultra high definition (UHD), or 8K (7680x4320) UHD or higher resolution (e.g., 16K, 32K), but are not limited thereto.

The processor 120 may control the display 110 to display an output image including a video image and a plurality of graphic objects.

To this end, the processor 120 may process input video content (or a video signal) to obtain a video image in which video content is included in one region. Specifically, the processor 120 may process in real time video content (or a video signal) input in real time to obtain a video image in which video content is included in one region. For example, assuming that the output image is an 8K image, a video image of 8K size in which the video content is included one region and the remaining region has a predetermined pixel value may be obtained. Here, the predetermined pixel value may be, for example, 0, but is not limited thereto. For example, a video image of 8K size in which the video content is included one region and the remaining region does not have a predetermined pixel value may also be obtained.

In addition, the processor 120 may process each of the plurality of graphic objects in parallel to obtain a plurality of graphic images including each of the plurality of graphic objects. For example, the processor 120 may render each of the plurality of graphic objects in parallel or decode a compressed image including each of the plurality of graphic objects in parallel to obtain the plurality of graphic images.

In this case, the processor 120 may obtain the output image by alpha blending the video image and the plurality of graphic images based on an alpha value corresponding to at least one of the plurality of graphic images. Here, the alpha blending refers to a method of displaying a mixture of background RGB values and RGB values thereabove by assigning a new value A (Alpha) to color values RGB to create a transparent effect when overlapping another image on the image. For example, the alpha values are divided into values of 0 to 255 or values of 0.0 to 1.0. 0 may mean completely transparent, and 255 (or the highest value, such as 1.0), which is the reverse thereof, may mean fully opaque. Alternatively, 0 may mean fully opaque, and 255 (or the highest value, such as 1.0), which is the reverse thereof, may mean completely transparent. For example, in a case in which values from 0 to 255 may be represented by assigning 8 bits to the alpha values, the larger the corresponding value, the higher the ratio of the corresponding pixel, and the lower the corresponding value, the lower the ratio of the corresponding pixel. According to one example, in a case in which the video V and a graphic G are mixed, the mixing operation may be represented by Mathematic expression such as V^{∗}Alpha+G^{∗}(1-Alpha) or V^{∗}(1-Alpha)+G^{∗}Alpha or V^{∗}Alpha+G.

According to an embodiment, the output image may be an image in which the video content is included in some region (hereinafter referred to as a first region) and at least one graphic object is included in the remaining region (hereinafter referred to as a second region). For example, assuming that the output image is an image of 8K, as illustrated in FIG. 1B, the output image may be an image in which the video content is played in some region of the image of 8K and the background image is included in the remaining region.

According to one example, each of the first region and the second region may include a graphic object having a first resolution. Here, the first resolution may be a same resolution as the output image (or the same resolution as that of the display 110), but is not limited thereto. For example, in a case in which the output image is an image of 8K, the first resolution may be 8K resolution. In this case, the processor 120 may obtain the output image by alpha blending a first graphic image including the first graphic object, a second graphic image including the second graphic object, and the video image based on the alpha value corresponding to at least one of the first or second image.

According to another example, the graphic object having the first resolution may be included in the second region, and a graphic object having a second resolution may be included in at least one of the first region or the second region. Here, the second resolution may be a resolution less than the first resolution.

In this case, the processor 120 may obtain the output image by up-scaling an image including the graphic object having the second resolution (hereinafter, referred to as a graphic image having a second resolution) and an alpha value corresponding to the graphic image having the second resolution, and alpha blending a graphic image having a first resolution, the video image, and the up-scaled graphic image based on an image including the graphic object having the first resolution (referred to as a graphic image having a first resolution).

As illustrated in FIG. 2B, a display device 100' may further include a memory 130.

The memory 130 may store data necessary for diverse embodiments of the disclosure. The memory 130 may be implemented in the form of a memory embedded in the display device 100 or may also be implemented in the form of a memory attachable to and detachable from the display device 100', depending on a data storing purpose. For example, data for driving the display device 100' may be stored in the memory embedded in the display device 100', and data for an extension function of the display device 100' may be stored in the memory attachable to and detachable from the display device 100'. Meanwhile, the member embedded in the display device 100' may be implemented as at least one of a volatile memory (e.g., a dynamic random access memory (DRAM), a static RAM (SRAM), a synchronous dynamic RAM (SDRAM), or the like), or a non-volatile memory (e.g., a one time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash, a NOR flash, or the like), a hard drive, or a solid state drive (SSD)). In addition, the memory attachable to and detachable from the display device 100' may be implemented in the form such as a memory card (e.g., a compact flash (CF), a secure digital (SD), a micro secure digital (Micro-SD), a mini secure digital (Mini-SD), an extreme digital (xD), a multi-media card (MMC), or the like), an external memory connectable to a USB port (e.g., a USB memory), or the like.

According to an embodiment, the memory 130 may store an image received from an external device (e.g., a source device), an external storage medium (e.g., USB), an external server (e.g., web hard), or the like. Here, the image may be a digital video, but is not limited thereto.

According to an embodiment, the processor 120 may write the graphic image having the first resolution to the memory 130, read the graphic image, and mix the graphic image with the video image. In this case, at a frequency lower than an output frequency (or a frame rate) of the display 110, the processor 120 may write the graphic image having the first resolution to the memory 130, read the graphic image having the first resolution, mix the graphic image having the first resolution with the video image, and then output the mixed image. For example, the processor 120 may read the graphic image having the first resolution from the memory 130 at the same output frequency as the output frequency of the display 110, that is, an output frequency of the video image. Accordingly, the video image and the graphic image having the first resolution may be mixed and output at the same output frequency.

For example, in a case in which the display 110 is a display having 8K resolution implemented with 7680 ^{∗} 4320 pixels, and the processor 120 outputs a video image having 8K resolution to the display 110 at 60 Hz, even when the performance of the GPU is low, rendering at a lower frequency allows the graphic image having 8K resolution to be rendered. For example, the processor 120 may render the graphic image having 8K resolution at 15 Hz and write the graphic image to the memory. Subsequently, the processor 120 may repeatedly read and output the graphic image having 8K resolution stored in the memory 130 at an output frequency of the display 110, that is, 60 Hz. That is, in a case in which the graphic image of 8K resolution is an image that does not change or has little movement for a predetermined time, the processor 120 may store the image in the memory 130 at 8K resolution and then repeatedly read and output the stored image to be synchronized with the output frequency of the display 110. Accordingly, even in a case in which the performance of the GPU of the processor 120 is somewhat low, the resolution of the high resolution graphic image may be maintained.

According to one example, the processor 120 may mix the graphic image and the video image having the first resolution using the alpha blending.

For example, assume that the background image provided in the second region is a graphic image having 8K resolution (hereinafter, referred to as an 8K graphic image). In this case, the processor 120 may obtain the output image including the video content and the graphic image based on the 8K video image in which the video content is included in one region, the 8K graphic image, an alpha blending image (or an alpha map) corresponding to the 8K graphic image.

Here, the alpha blending image may be a map (e.g., 8K size map) in which an alpha value corresponding to a pixel position of the first region is smaller than the threshold value, and an alpha value corresponding to a pixel position of the second region is greater than the threshold value. For example, in a case in which the alpha value corresponding to the first region is 0 and the alpha value corresponding to the background region is 255, through the alpha blending, transparency of the 8K graphic image is large in the first region and the transparency of the 8K graphic image is reduced in the second region. Accordingly, the content in which the video image is included in the first region and the 8K graphic image is included in the second region may be obtained.

According to another example, the processor 120 may mix the 8K graphic image and the video image based on position information on the first region. For example, the processor 120 may obtain pixel coordinate information of the first region at the time of processing the video image. Accordingly, the processor 120 may mix the 8K graphic image and the video image with each other by providing the scaled video content to the corresponding region and providing the 8K graphic image to the remaining region, based on the obtained pixel coordinate information.

On the other hand, according to another embodiment, the processor 120 may also obtain the output image by mixing the graphic image having the first resolution, the graphic image having the second resolution less than the first resolution, and the video image having the first resolution. In this case, the processor 120 may upscale the graphic image having the second resolution to the first resolution, read the graphic image having the first resolution from the memory 130, and mix the graphic image having the first resolution with the video image and the up-scaled graphic image. Here, the up-scaled graphic image may be mixed into at least one of the video image region or the background image region. For example, the processor 120 may upscale a graphic image having 2K or 4K resolution to the 8K resolution and mix the up-scaled graphic image with the 8K graphic image and the 8K video image.

For example, the processor 120 may render the graphic image having 2K or 4K resolution and write the rendered graphic image to the memory 130, and may upscale the graphic image of 2K or 4K resolution stored in the memory 130 to an 8K size. In this case, the processor 120 may render the graphic image of 2K or 4K resolution at the same frequency as the output frequency of the display 110. Here, it was assumed that the performance of the GPU of the processor 120 is insufficient to render 8K resolution at the same frequency as the output frequency of the display 110 as described above, but is sufficient to render the graphic image having 2K or 4K resolution at the same frequency as the output frequency of the display 110.

For example, in a case in which the processor 120 outputs the video image to the display 110 at 60 Hz, the processor 120 may render the graphic image having 2K or 4K resolution at 60 Hz, and render the graphic image having 8K resolution at 15 Hz to be written to the memory 130. Subsequently, the processor 120 may upscale a size of the graphic image having 2K or 4K resolution rendered at 60 Hz and stored in the memory 130, and repeatedly read and output the graphic image having 8K resolution at 60 Hz.

In this case, the processor 120 may mix the up-scaled graphic image with the video image and then mix the mixed image with the 8K graphic image. Alternatively, the processor 120 may mix the up-scaled graphic image with the 8K graphic image and then mix the mixed image with the video image. Alternatively, the processor 120 may mix the 8K graphic image and the video image, and then mix the mixed image with the up-scaled graphic image.

Here, the alpha blending may be used for mixing between the respective images. However, the disclosure is not limited thereto, and each image may be mixed using position information (or coordinate information) of the region included in each image.

In a case in which the processor 120 mixes the respective images using the alpha blending, the processor 120 may upscale an alpha value corresponding to the graphic image of 2K or 4K resolution to the 8K size, and then perform the mixing using the up-scaled alpha value. For example, the scaling of the alpha value may use at least one scaling technique (or interpolation technique) of polyphase scaling (or polyphase interpolation), trilinear scaling (or trilinear interpolation), linear scaling (or linear interpolation), or bilinear scaling (or bilinear scaling). For example, in a case in which an alpha map of 8K size is generated based on an alpha map of 4K size, the alpha value corresponding to the pixel value being added needs to be interpolated, and the alpha map of 8K size may be generated by using a variety of existing interpolation techniques.

According to one implementation, the processor 120 may include a graphics processing unit (GPU) that renders the graphic image having the first resolution at a frequency lower than the output frequency of the display 110 and stores the rendered graphic image in the memory 130, and renders the graphic image having the second resolution at the output frequency of the display 110.

As an example, the processor 120 may include a GPU configured to process the graphic image having the second resolution, a first mixer configured to firstly mix the graphic image having the second resolution processed by the GPU with the video image, a decoder configured to decode the graphic image having the first resolution and write the decoded graphic image to the memory 130, and a second mixer configured to read the graphic image having the first resolution written to the memory 130 and secondly mix the read graphic image with a first mixed image, that is, an output of the first mixer. In this case, the processor 120 may further include a video processor configured to process the video image or the first mixed image.

As another example, the processor 120 may include a decoder configured to process the graphic image having the first resolution and write the processed graphic image to the memory 130, a first mixer configured to read the graphic image having the first resolution written to the memory 130 and firstly mix the read graphic image with the video image, a GPU configured to process the graphic image having the second resolution, and a second mixer configured to secondly mix the graphic image having the second resolution processed by the GPU with a first mixed image, that is, an output of the first mixer. In this case, the processor 120 may further include a video processor configured to process the video image or the first mixed image.

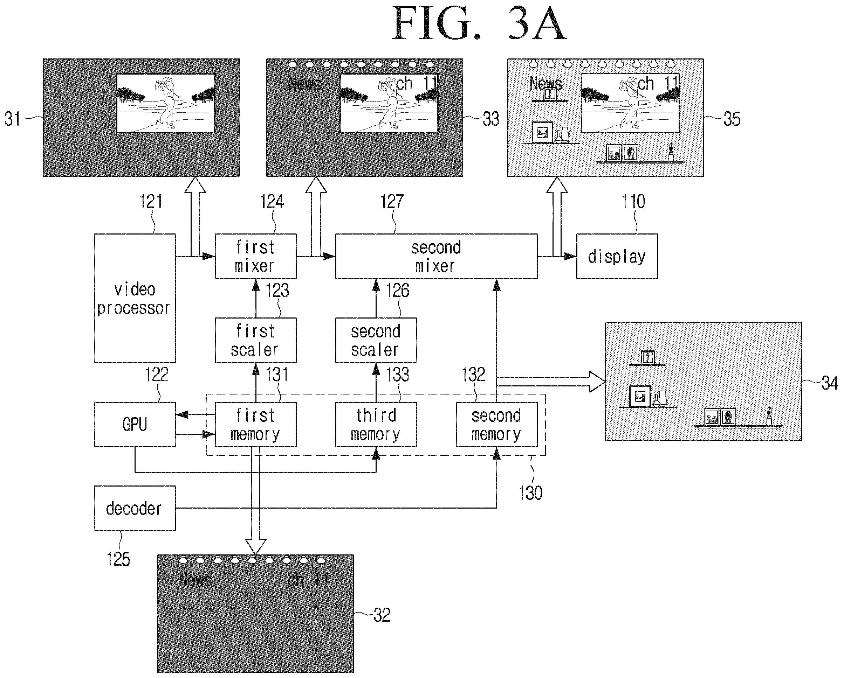

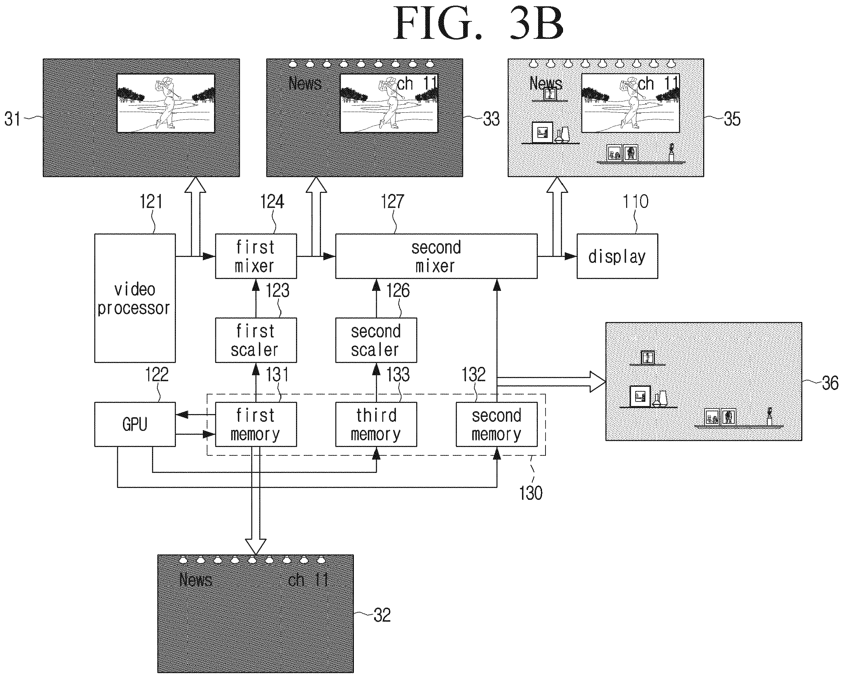

FIGS. 3A and 3B are diagrams illustrating implementations of a processor according to diverse embodiments of the disclosure.

Referring to FIG. 3A, the processor 120 may include a video processor 121, a GPU 122, a decoder 125, a first scaler 123, a first mixer 124, a second scaler 126, and a second mixer 127. Here, each component may be implemented by at least one software, at least one hardware, or a combination of thereof.

According to an example, software or hardware logic corresponding to each component may be implemented in a single chip. For example, the video processor 121 may be implemented as a digital signal processor (DSP), and may be implemented in a single chip with a graphics processing unit (GPU) (or a visual processing unit (VPU)) and other components. However, the disclosure is not limited thereto, and software or hardware logics corresponding to some of the components may be implemented in a single chip, and software or hardware logics corresponding to the reminder may be implemented in another chip.

FIG. 3A is a diagram illustrating a case in which a high resolution compressed image is decoded by the decoder 125 and used as the background image according to an embodiment of the disclosure.

The video processor 121 may perform various image quality processing on input video content. Here, various image quality processing may include noise filtering, texture processing, edge processing, scaling, and the like.

According to an embodiment, the video processor 121 may output a video image 31 having a first resolution (e.g., 8K) equal to or greater than a threshold resolution. Here, the video image 31 may be an image in which a video region is included in one region and the remaining regions have a predetermined pixel value (e.g., 0).

The GPU 122 may perform a graphic processing function. For example, the GPU 122 may generate a graphic image including various objects such as icons, images, texts, and the like by using a calculator (not illustrated) and a renderer (not illustrated). Here, the calculator (not illustrated) may calculate attribute values, such as coordinate values, shapes, sizes, and colors, to which each object is to be displayed according to a layout of a screen based on a received control command. In addition, the renderer (not illustrated) may render the graphic image of various layouts including the objects on the basis of the attribute values calculated by the calculator (not illustrated).

According to an embodiment, the GPU 122 may render a graphic image having a second resolution (e.g., 2K, 4K) less than a critical resolution at an output frequency that is the same as the video signal or similar within a critical error range. Specifically, the GPU 122 may render the graphic image having the second resolution less than the critical resolution and write the rendered graphic image to the first memory 131. For example, the GPU 122 may render a 2K graphic image 32 including graphics "News" and "light" provided in the background region, and a graphic "Ch 11" provided in the video region, and write the rendered graphic image to the first memory 131. Here, the graphic image 32 may be an image having a second resolution in which regions other than the graphics ("News", "light", and "Ch 11") have a predetermined pixel value (e.g., 0).

In addition, the GPU 122 may generate an alpha value corresponding to the rendered graphic image. For example, the GPU 122 may generate alpha maps corresponding to each of the graphics "News" and "light" provided in the background region, and the graphic "Ch 11" provided in the video region, and store the generated alpha maps in the first memory 131 or another memory. Here, the alpha map may be a map in which pixel regions corresponding to the graphics ("News", "light", and "Ch 11") have a small alpha value and the remaining region has a large alpha value, while having a second resolution size.

In some cases, the GPU 122 may further perform a function of decoding an image. For example, the GPU 122 may decode compressed images of various formats using coding logic. However, the decoding may also be performed by an operation of a CPU (not illustrated) or the decoder 123 other than the GPU 122.

The first scaler 123 may be software or hardware that scales the graphic image rendered to the GPU 122. According to an example, the first scaler 124 may upscale the graphic image having the second resolution (e.g., 2K, 4K) to the first resolution (e.g., 8K). For example, the first scaler 123 may upscale the 4K graphic image 32 including the graphics ("News", "light", and "Ch 11") written in the first memory 131 to an 8K graphic image (not illustrated).

In addition, the first scaler 123 may scale an alpha value corresponding to the graphic image rendered on the GPU 122 to correspond to the up-scaled graphic image. For example, the first scaler 123 may upscale a 2K size alpha map generated by the GPU 122 to an 8K size alpha map. The scaling of the alpha value may also be performed by a scaler separate from the first scaler 123 in some cases.

The first mixer 124 may be software or hardware that mixes the graphic image scaled by the first scaler 124 with the video image processed by the video processor 121. Specifically, the first mixer 124 may mix the graphic image scaled by the first scaler 123 and the video image processed by the video processor 121 based on the alpha value scaled by the first scaler 123. Here, the scaling of the alpha value may be performed according to at least one of polyphase scaling, trilinear scaling, linear scaling, or bilinear scaling, as described above. For example, in the scaled alpha map, in a case in which the alpha value corresponding to the graphics ("News", "light", and "Ch 11") is 255, and the alpha value of the remaining regions is 0, the graphic region has low transparency and the remaining regions have high transparency such that the graphic region may be provided with the graphics ("News", "light", and "Ch 11") and the remaining regions may be provided with other content to be mixed (e.g., a graphic image or a video image having a first resolution described later).

The decoder 125 may be software or hardware that decoding an image. Here, the image to be decoded may be at least one of a video image and a graphic image.

According to an embodiment, when the graphic image having the first resolution (e.g., 8K) is a compressed image, the decoder 125 may decode the graphic image and write the decoded graphic image to the second memory 132. Here, the compressed image may be various types of compressed images such as JPG, JPEG, ... , and the like. However, when the graphic image is not the compressed image, it is also possible to bypass the decoder 125. In some cases, the GPU 122 or a CPU (not illustrated) may also be used to decode various formats of compressed image. For example, as illustrated in FIG. 3A, an 8K resolution background image 34 including a shelf image on which a picture frame, a vase, or the like is placed may be decoded by the decoder 135 and written to the second memory 132.

The second scaler 126 may be software or hardware that scales an alpha value corresponding to the graphic image having the second resolution rendered by the GPU 122. For example, an alpha blending processing is required to provide the graphic image having the second resolution rendered by the GPU 122 on the background image and/or video image decoded by the decoder 125. However, the alpha value generated by the GPU 122 corresponds to the resolution of the graphic image before the up-scaling, i.e., the first resolution (e.g., 2K or 4K), and thus it is necessary to scale the alpha value in order to obtain an alpha value corresponding to the resolution of the up-scaled graphic image, that is, the second resolution (e.g., 8K).

The second mixer 127 may be software or hardware that mixes the output of the first mixer 125 and the background image. Specifically, the second mixer 127 may read the graphic image having the second resolution written to the second memory 132 and mix the read graphic image with an output image of the first mixer 125. Here, the output image of the first mixer 125 may be an image in which the graphic image up-scaled by the first scaler 124 and the video image processed by the video processor 121 are mixed with each other. In this case, the second mixer 127 may mix the output image of the first mixer 125 and the background image 34 written to the second memory 132 with each other by using the alpha value up-scaled by the second scaler 126.

For example, the second mixer 127 may transfer sink information to specific logic disposed between the second mixer 127 and the second memory 132 based on an output frequency of a video frame transferred from the video processor 121, and receive the background image 34 read from the second memory 132 through the corresponding logic.

The second mixer 127 may mix the output image 33 of the first mixer 124 and the background image 34 based on an alpha map corresponding to the output image 33 of the first mixer 124. Accordingly, an output of the second mixer 127 may be an image 35 including the graphic information rendered by the GPU 122 and the background image 34 as illustrated in FIG. 3A.

Meanwhile, in a case in which the output of the first mixer 125 is a video image that does not include the graphic image and includes only video frames in some regions, unlike in FIG. 3A, it is also possible to mix the video frames to the corresponding region of the background image based on the position information of the video region. However, even in this case, video content may also be mixed using the alpha value.

FIG. 3B is a diagram illustrating a case in which a high resolution graphic image is rendered by the GPU 122 and used as the background image according to another embodiment of the disclosure.

Referring to FIG. 3B, the processor 120 may include the video processor 121, the GPU 122, the first scaler 123, the first mixer 124, the second scaler 126, and the second mixer 127. Although the decoder 125 is omitted in FIG. 3B for convenience of description, the decoder 125 may be required for other decoding operations such as decoding of video content. In FIG. 3B, only operations different from those illustrated in FIG. 3A will be described.

The GPU 122 may further render a graphic image having a first resolution (e.g., 8K) equal to or greater than a critical resolution. The GPU 122 may render the graphic image having the first resolution at an output frequency lower than an output frequency (or a frame rate) of a video signal, and write the rendered graphic image to the second memory 132. In a case in which the performance of the GPU 122 may render the graphic image having the second resolution (e.g., 2K or 4K) at an output frequency equal to or similar to the output frequency of the video signal, when the GPU 122 renders the graphic image having the first resolution (e.g., 8K) equal to or greater than the critical resolution, the output frequency of the GPU 122 is reduced in proportion to the rendered graphic image. For example, in order for the GPU having the performance capable of outputting a 4K graphic image at 60Hz to render an 8K graphic image, the output frequency needs to be reduced to 15Hz to enable the above-mentioned operation.

Accordingly, in a case in which the graphic image having the first resolution rendered by the GPU 122 is rendered at a low output frequency and is stored in the second memory 132, the output frequency may be matched with or similar to the output frequency of the video signal by repeatedly reading and outputting the stored graphic image. For example, a background image in which the same image remains for a predetermined time or more may be rendered at an output frequency lower than the output frequency of the video signal and written to the second memory 132, and repeatedly then read at an output frequency equal to or similar to the output frequency of the video signal and output. For example, as illustrated in FIG. 3B, the GPU 122 may render an 8K resolution background image 36 including a shelf image on which a picture frame, a vase, or the like is placed and store the rendered background image 36 in the second memory 132.

The second scaler 126 may upscale an alpha value corresponding to the graphic image having the second resolution rendered by the GPU 122. For example, a 2K size alpha map may be up-scaled to an 8K size alpha map.

In this case, the second mixer 127 may mix the output image of the first mixer 124 and the background image written to the second memory 132 with each other by using the alpha map up-scaled by the second scaler 126.

Although not illustrated in the drawings, the processor 120 may further include a frame rate converter. The frame rate converter may be software or hardware that changes the output frequency of the video image. For example, the frame rate converter may be disposed at a rear stage of the first mixer 124 to change the output frequency of the video image output from the first mixer 124 from 60 Hz to 120 Hz. In this case, the second mixer 127 may receive the graphic image read from the second memory 132 based on the changed output frequency of the video frame transferred from the frame rate converter.

Although FIG. 3A illustrates the embodiment in which a compressed photo image having a first resolution is decoded and used as the background image and FIG. 3B illustrates the embodiment in which a graphic image having the first resolution rendered by the GPU 122 is used as the background image, the photo image decoded by the decoder 125 and the graphic image rendered by the GPU 122 may be used together as the background image. In this case, the GPU 122 may further generate an alpha value corresponding to the rendered graphic image.

In the above-described embodiment, the first to third memories 131 to 133 may be implemented in a size suitable for performing a corresponding operation. For example, the second memory 132 may be implemented in a size suitable for storing the rendered or decoded graphic image having the first resolution.

In addition, although the first to third memories 131 to 133 have been described as separate hardware components, according to another embodiment, the first to third memories 131 to 133 may be implemented with different address regions in one memory. As such, the processing may be performed using separate memories or other regions in one memory for bandwidth efficiency of the memory. However, according to another embodiment, data may also be stored using a compression method for memory capacity and bandwidth efficiency. For example, when the data is compressed and stored at 1/2, the memory capacity is reduced and the bandwidth for the operation is reduced.

In addition, in the above-described embodiment, the first mixer 124 and the second mixer 127 are described as separate mixers, but may be implemented as one mixer.

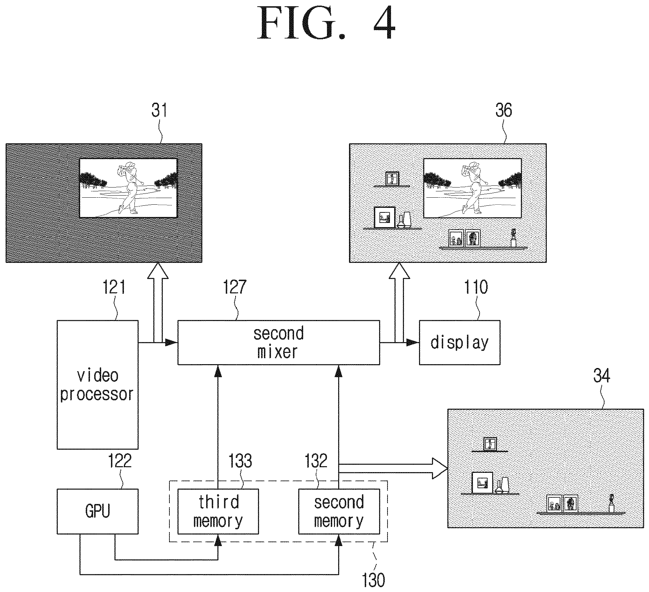

FIG. 4 is a diagram illustrating an operation of the processor according to another embodiment of the disclosure.

FIG. 4 illustrates a case in which the output image does not include the graphic image having the second resolution, and includes only the graphic image having the first resolution as the background image, unlike the embodiments illustrated in FIGS. 3A and 3B. That is, the GPU 122 may not render the graphic image having the second resolution and may render only the graphic image having the first resolution in some cases. Alternatively, a similar operation may be performed in a case in which the graphic image having the second resolution is not rendered and only the graphic image having the first resolution decoded by the GPU 122 or the decoder (not illustrated) is included as the background image.

An embodiment illustrated in FIG. 4 is an embodiment in which the components related to the second graphic image are omitted from the embodiments illustrated in FIGS. 3A and 3B, and may not thus include the components related to the second graphic image as illustrated.

Specifically, the GPU 122 may render the graphic image having the first resolution (decode the graphic image having the first resolution) and write the rendered (or decoded) graphic image to the second memory 132, and may generate an alpha value corresponding to the graphic image having the first resolution and store the generated alpha value in the third memory 133. In this case, the second mixer 127 may receive the video image processed by the video processor 121 and the graphic image having the first resolution read from the second memory 132 with each other based on the alpha value stored in the third memory 133.

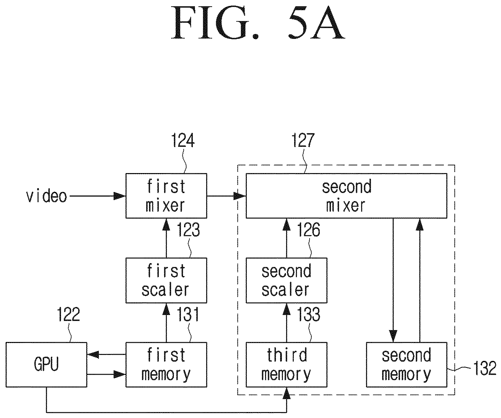

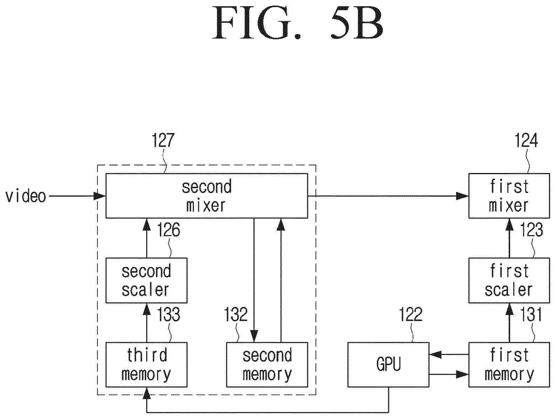

FIGS. 5A and 5B are diagrams illustrating a processing sequence according to diverse embodiments of the disclosure.

FIG. 5A illustrates an embodiment in which the low resolution graphic image, for example, the 2K graphic image is first processed, the high resolution background image, for example, the 8K background image is processed, and the two processed images are then mixed, as described in FIG. 3A (or FIG. 3B).

FIG. 5B illustrates an embodiment in which the high resolution background image, for example, the 8K background image is processed, the low resolution graphic image, for example, the 2K graphic image is processed, and the two processed images are then mixed, unlike in FIG. 3A (or FIG. 3B).

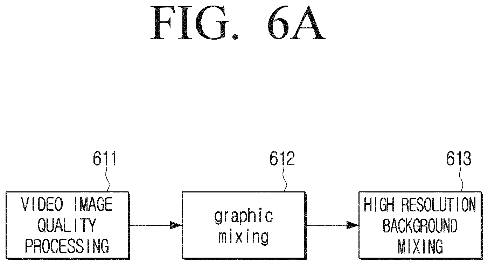

FIGS. 6A to 6D are diagrams illustrating a processing sequence according to diverse embodiments of the disclosure.

According to an embodiment illustrated in FIG. 6A, after image quality processing is performed on the video image (611), a low resolution graphic image may be mixed with the image quality processed video image (612). Subsequently, a high resolution background image may be mixed with the mixed image (613). Here, the low resolution and the high resolution may have a relative meaning. For example, the low resolution graphic image may be a 2K or 4K graphic image, and the high resolution background image may be an 8K graphic image.

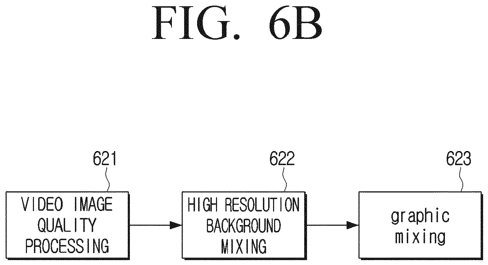

According to another embodiment illustrated in FIG. 6B, after image quality processing is performed on the video image (621), a high resolution background image may be mixed with the image quality processed video image (622). Subsequently, a low resolution graphic image may be mixed with the mixed image (623).

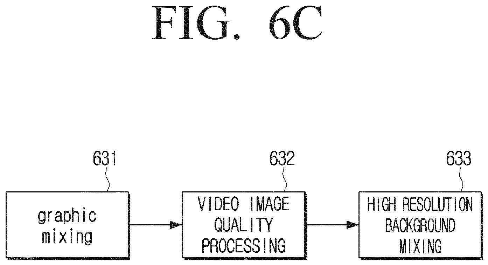

According to still another embodiment illustrated in FIG. 6C, after a low resolution graphic image is mixed with the video image (631), image quality processing is performed on the mixed image (632). Subsequently, a high resolution background image may be mixed with the image quality processed image (633).

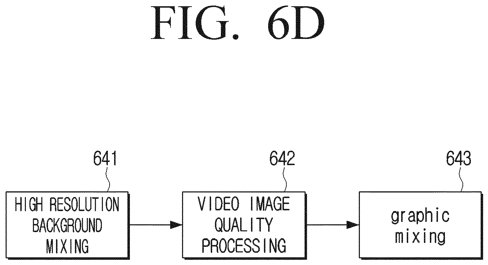

According to still another embodiment illustrated in FIG. 6D, after a high resolution graphic image is mixed with the video image (641), image quality processing is performed on the mixed image (642). Subsequently, a low resolution graphic image may be mixed with the image quality processed image (643).

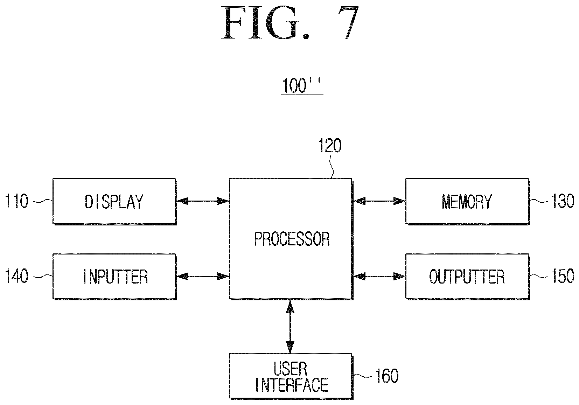

FIG. 7 is a diagram illustrating one implementation of a display device according to another embodiment of the disclosure.

Referring to FIG. 7, a display device 100" includes the display 110, the processor 120, the memory 130, an inputter 140, an outputter 150, and a user interface 160. A detailed description for components overlapped with components illustrated in FIG. 2 among components illustrated in FIG. 7 will be omitted.

According to an embodiment of the disclosure, the memory 130 may be implemented as a single memory that stores data generated in various operations according to the disclosure. However, according to another embodiment of the disclosure, the memory 130 may also be implemented to include a plurality of memories.

The memory 130 may store at least a portion of an image input through the inputter 140, various image information required for image processing, for example, texture information for texture processing and edge information for edge processing, and the like. In addition, the memory 130 may also store a final output image to be output through the display 110.

The inputter 140 receives various types of contents. For example, the inputter 140 may receive an image signal from an external device (e.g., a source device), an external storage medium (e.g., a USB memory), an external server (e.g., a web hard), or the like in a streaming or download manner through a communication manner such as AP-based Wi-Fi (Wi-Fi, Wireless LAN Network), Bluetooth, Zigbee, Wired/Wireless Local Area Network (WAN), Wide Area Network (WAN), Ethernet, 5th Generation (5G), IEEE 1394, High-Definition Multimedia Interface (HDMI), Universal Serial Bus (USB), Mobile High-Definition Link (MHL), Audio Engineering Society/European Broadcasting Union (AES/EBU), Optical, Coaxial, or the like. Here, the image signal may be a digital image signal of any one of a standard definition (SD) image, a high definition (HD) image, a full HD image, and an ultra HD image, but is not limited thereto.

The outputter 150 outputs a sound signal. For example, the outputter 150 may convert a digital sound signal processed by the processor 120 into an analog sound signal, and amplify and output the analog sound signal. For example, the outputter 150 may include at least one speaker unit, a D/A converter, an audio amplifier, and the like that may output at least one channel. According to an example, the outputter 150 may be implemented to output various multi-channel sound signals. In this case, the processor 120 may control the outputter 150 to perform and output enhancement processing on the input sound signal so as to correspond to the enhancement processing of the input image. For example, the processor 120 may convert an input two-channel sound signal into a virtual multi-channel (e.g., a 5.1 channel) sound signal, or recognize a position where the display device 100" is placed and processes the recognized position with a stereo sound signal optimized for a space, or provide an optimized sound signal according to the type (e.g., content genre) of the input image.

The user interface 160 may be implemented as a device such as a button, a touch pad, a mouse, or a keyboard, or may be implemented as a touch screen, a remote controller transceiver, or the like that may also perform the display function described above and a manipulation/input function. The remote controller transceiver may receive a remote controller signal from an external remote controller or transmit the remote controller signal through at least one communication scheme of infrared communication, Bluetooth communication, or Wi-Fi communication.

The display device 100" may further include a tuner and a demodulator according to implementation. A tuner (not illustrated) may receive a radio frequency (RF) broadcast signal by tuning a channel selected by a user or all previously stored channels among RF broadcast signals received through an antenna. The demodulator (not illustrated) may receive and demodulate a digital IF signal (DIF) converted by the tuner and perform channel decoding. According to an embodiment, the input image received through the tuner may be processed through the demodulator (not illustrated) and then provided to the processor 120 for image processing according to an embodiment of the disclosure.

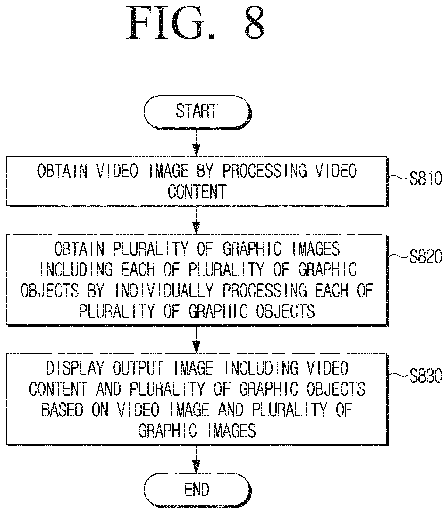

FIG. 8 is a flowchart illustrating a control method of a display device according to an embodiment of the disclosure.

According to a control method of a display device that outputs contents including a video region and a background region illustrated in FIG. 8, a video image is obtained by processing input video content (S810).

In addition, a plurality of graphic images including each of the plurality of graphic objects are obtained by processing each of the plurality of graphic objects is processed in parallel (S820). According to an example, the plurality of graphic images may be obtained by rendering each of the plurality of graphic objects in parallel or decoding a compressed image including each of the plurality of graphic objects in parallel.

Subsequently, an output image including the video content and the plurality of graphic objects is displayed based on the video image and the plurality of graphic images (S830). Here, the output image may be a 4K or 8K image.

In addition, in S830 in which the output image is displayed, the output image may be obtained by alpha blending the video image and the plurality of graphic images based on an alpha value corresponding to each of the plurality of graphic images.

In this case, the display device is implemented as a modular display device in which a plurality of display modules are connected and resolution of the display device may be changed according to a number of a plurality of display modules.

In addition, in S830 in which the output image is displayed, the output image in which the video content is included in some regions and at least one graphic object is included in the remaining regions may be displayed.

In addition, in S830 in which the output image is displayed, the output image in which a graphic object having a first resolution is included in the remaining regions and a graphic object having a second resolution is included in at least one of some regions or the remaining regions may be displayed. In this case, the second resolution may be less than the first resolution.

In addition, in S830 in which the output image is displayed, the output image may be obtained by up-scaling the graphic image having the second resolution and an alpha value corresponding to the graphic image having the second resolution, and alpha blending the graphic image having the first resolution, the video image, and the up-scaled graphic image based on the up-scaled alpha value.

In addition, the first resolution is the same resolution as that of the display device, and in S820 in which the plurality of graphic images are obtained, the graphic image having the first resolution may be written to the memory at a frequency lower than an output frequency of the display device, the graphic image having the first resolution may be read from the memory at the same frequency as the output frequency of the display device, and the graphic image having the second resolution may be rendered at the output frequency of the display device.

According to the diverse embodiments described above, even though the performance of the GPU is low, the resolution of the graphic provided together with the high resolution video content may be maintained at the high resolution.

In addition, in the case of the high resolution graphic image provided according to the diverse embodiments of the disclosure, a pixel unit motion is possible differently from the up-scaled graphic image. For example, assuming that a motion corresponding to one pixel unit occurs in a plurality of frames, in the case of the up-scaled graphic image, the motion appears in a plurality of pixel units (the number of up-scaled pixels), but in the case of the high resolution graphic image, the motion appears in one pixel unit.

According to diverse embodiments of the disclosure, the resolution of the graphic provided together with the high resolution video content may be maintained at the high resolution.

The diverse embodiments of the disclosure may be applied to all electronic devices capable of processing the image, such as an image receiving device such as a set-top box and an image processing device, as well as the display device.

On the other hand, the methods according to the diverse embodiments of the disclosure described above may be implemented in the form of an application or software installable on an existing display device or image processing device. Alternatively, the methods according to the diverse embodiments of the disclosure described above may be performed using a deep learning based artificial neural network (or deep artificial neural network), that is, a learning network model.

In addition, the methods according to the diverse embodiments of the disclosure described above may be implemented by only upgrading software or hardware of the existing display device or image processing device.

In addition, the diverse embodiments of the disclosure described above may also be performed through an embedded server included in the display device or the image processing device, or an external server of the image processing device.

Meanwhile, according to an embodiment of the disclosure, the diverse embodiments described hereinabove may be implemented by software including instructions that are stored in machine (e.g., a computer)-readable storage media. The machine is a device that invokes the stored instructions from the storage media and is operable according to the invoked instructions, and may include the image processing device (e.g., an image processing device A) according to the disclosed embodiments. When the instructions are executed by the processor, the processor may perform functions corresponding to the instructions, either directly or using other components under the control of the processor. The instructions may include codes generated or executed by a compiler or an interpreter. The machine-readable storage media may be provided in the form of non-transitory storage media. Here, the terms 'non-transitory' means that the storage media do not include a signal and is tangible, but do not distinguish whether data is stored semi-permanently or temporarily in the storage media.

In addition, according to an embodiment of the disclosure, the method according to the diverse embodiments described above may be included and provided in a computer program product. The computer program product may be traded as a product between a seller and a purchaser. The computer program product may be distributed in the form of a machine readable storage media (e.g., a compact disc read only memory (CD-ROM)), or online through an application store (e.g., PlayStore^{™}). In case of the online distribution, at least a portion of the computer program product may be at least temporarily stored in a storage medium such as a memory of a relay server, a server of an application store, or a relay server, or be temporarily generated.

Each of the components (e.g., modules or programs) according to the diverse embodiments described above may include a single entity or a plurality of entities, and some sub-components of the sub-components described above may be omitted, or other sub-components may be further included in the diverse embodiments. Alternatively or additionally, some components (e.g., modules or programs) may be integrated into one entity to perform the same or similar functions performed by the respective components prior to the integration. The operations performed by the module, the program, or other component, in accordance with the diverse embodiments may be performed in a sequential, parallel, iterative, or heuristic manner, or at least some operations may be executed in a different order or omitted, or other operations may be added.

## Claims

1. A display device (100) comprising:
a display (110);
a memory (130); and
a processor (120) configured to control the display (110) to display an output image (35) including video content and a plurality of graphic objects,
wherein the processor (120) is configured to:
obtain a video image (31) by processing input video content,
obtain a plurality of graphic images including each of the plurality of graphic objects by processing each of the plurality of graphic objects in parallel, and
obtain the output image (35) by mixing the obtained video image (31) and the obtained plurality of graphic images,
**characterised in that** the processor is configured to obtain the plurality of graphic images by:
writing a first graphic image (34) having a first resolution, to the memory (130) at a frequency lower than an output frequency of the display (110), the first graphic image being a background image,
writing a second graphic image (32) having a second resolution lower than the first resolution, to the memory (130) at a same frequency as the output frequency of the display,
reading the first and second graphic images from the memory (13) at a same frequency as the output frequency of the display (110), and
upscaling the second graphic image to increase its resolution from the second resolution to the first resolution such that the obtained first graphic image and second graphic image both have the first resolution.

2. The display device (100) as claimed in claim 1, wherein the processor (120) is configured to obtain the output image (35) by alpha blending the video image (31) and the plurality of graphic images based on an alpha value corresponding to each of the plurality of graphic images.

3. The display device (100) as claimed in claim 1 or 2, wherein the display (110) is implemented as a modular display in which a plurality of display modules are connected, and
a resolution of the display (110) is changed according to a number of the plurality of display modules.

4. The display device (100) as claimed in anyone of claims 1 to 3, wherein the processor (120) is configured to obtain the plurality of graphic images by rendering each of the plurality of graphic objects in parallel or decoding a compressed image including each of the plurality of graphic objects in parallel.

5. The display device (100) as claimed in anyone of claims 1 to 4, wherein the processor (120) includes:
a video processor (121) configured to process the video content; and
a graphics processing unit, GPU, (122) configured to process the plurality of graphic objects.

6. The display device (100) as claimed in anyone of claims 1 to 5, wherein the processor (120) controls the display (110) to display the output image (35) in which the video content is included in first regions and at least one graphic object is included in remaining regions that are not the first regions.

7. The display device as claimed in claim 6, wherein the processor (120) controls the display (110) to display the output image (35) in which a graphic object belonging to the first graphic image is included in the remaining regions, and a graphic object belonging to the second graphic image is included in at least one of the first regions or the remaining regions.

8. The display device (100) as claimed in claim 7, wherein the processor (120) is configured to obtain the output image (35) by up-scaling an alpha value corresponding to the second graphic image having the second resolution, and alpha blending a the first graphic image, the video image (31), and the up-scaled second graphic image based on the up-scaled alpha value.

9. The display device (100) as claimed in anyone of claims 7 to 8, wherein the processor (120) includes:
a GPU (122) configured to process the second graphic image having the second resolution;
a first mixer (124) configured to mix into a first mixed image the upscaled second graphic image having the second resolution with the video image (31);
a decoder (125) configured to decode the first graphic image having the first resolution; and
a second mixer (127) configured to mix the decoded graphic image having the first resolution with said first mixed image mixed by the first mixer (124).

10. The display device (100) as claimed in anyone of claims 1 to 9, wherein the output image (35) is a high resolution image of 4K or 8K image or more.

11. A control method of a display device (100), the control method comprising:
obtaining (S810) a video image (31) by processing input video content;
obtaining (S820) a plurality of graphic images including each of a plurality of graphic objects by processing each of the plurality of graphic objects in parallel; and
displaying(S830) an output image (35) including the video content and the plurality of graphic objects based on the obtained video image (31) and the obtained plurality of graphic images,
**characterised in that** obtaining the plurality of graphic images comprises:
writing a first graphic image, having a first resolution, to a memory (130) at a frequency lower than an output frequency of the display (110), the first graphic image being a background image,
writing a second graphic image, having a second resolution lower than the first resolution, to the memory (130) at a same frequency as the output frequency of the display,
reading the first and second graphic images from the memory (13) at a same frequency as the output frequency of the display (110), and
upscaling the second graphic image to increase its resolution from the second resolution to the first resolution such that the obtained first graphic image and second graphic image both have the first resolution.

12. The control method as claimed in claim 11, wherein in the displaying of the output image (35), the output image (35) is obtained by alpha blending the video image (31) and the plurality of graphic images based on an alpha value corresponding to each of the plurality of graphic images.

13. The control method as claimed in claim 11 or 12, wherein the display device (100) is implemented as a modular display device (100) in which a plurality of display modules are connected, and
a resolution of the display device (100) is changed according to a number of the plurality of display modules.

14. The control method as claimed in anyone of claims 11 to 13, wherein in the obtaining of the plurality of graphic images, the plurality of graphic images are obtained by rendering each of the plurality of graphic objects in parallel or decoding a compressed image including each of the plurality of graphic objects in parallel.

## Patentansprüche

1. Anzeigevorrichtung (100), umfassend:
eine Anzeige (110);
einen Speicher (130); und
einen Prozessor (120), der dazu konfiguriert ist, die Anzeige (110) zu steuern, um ein Ausgabebild (35) anzuzeigen, das Videoinhalt und eine Vielzahl von Grafikobjekten enthält,
wobei der Prozessor (120) konfiguriert ist zum:
Erhalten eines Videobilds (31) durch Verarbeiten von eingegebenem Videoinhalt,
Erhalten einer Vielzahl von Grafikbildern, die jedes der Vielzahl von Grafikobjekten enthalten, durch paralleles Verarbeiten jedes der Vielzahl von Grafikobjekten, und
Erhalten des Ausgabebildes (35) durch Mischen des erhaltenen Videobildes (31) und der erhaltenen Vielzahl von Grafikbildern,
**dadurch gekennzeichnet, dass** der Prozessor dazu konfiguriert ist, die Vielzahl von Grafikbildern zu erhalten durch:
Schreiben eines ersten Grafikbildes (34), das eine erste Auflösung aufweist, in den Speicher (130) mit einer Frequenz, die niedriger als eine Ausgabefrequenz der Anzeige (110) ist, wobei das erste Grafikbild ein Hintergrundbild ist,
Schreiben eines zweiten Grafikbildes (32), das eine zweite Auflösung aufweist, die niedriger als die erste Auflösung ist, in den Speicher (130) mit einer identischen Frequenz wie die Ausgabefrequenz der Anzeige,
Lesen des ersten und des zweiten Grafikbildes aus dem Speicher (13) mit einer identischen Frequenz wie die Ausgabefrequenz der Anzeige (110) und
Hochskalieren des zweiten Grafikbilds, um seine Auflösung von der zweiten Auflösung auf die erste Auflösung zu erhöhen, sodass das erhaltene erste Grafikbild und das zweite Grafikbild beide die erste Auflösung aufweisen.

2. Anzeigevorrichtung (100) nach Anspruch 1, wobei der Prozessor (120) dazu konfiguriert ist, das Ausgabebild (35) durch Alpha-Blending des Videobilds (31) und der Vielzahl von Grafikbildern basierend auf einem Alpha-Wert, der jedem von der Vielzahl von Grafikbildern entspricht, zu erhalten.

3. Anzeigevorrichtung (100) nach Anspruch 1 oder 2, wobei die Anzeige (110) als eine modulare Anzeige implementiert ist, in der eine Vielzahl von Anzeigemodulen verbunden sind, und
eine Auflösung der Anzeige (110) gemäß einer Anzahl der Vielzahl von Anzeigemodulen verändert wird.

4. Anzeigevorrichtung (100) nach einem der Ansprüche 1 bis 3, wobei der Prozessor (120) dazu konfiguriert ist, die Vielzahl von Grafikbildern durch paralleles Rendern jedes der Vielzahl von Grafikobjekten oder paralleles Dekodieren eines komprimierten Bildes, das jedes der Vielzahl von Grafikobjekten enthält, zu erhalten.

5. Anzeigevorrichtung (100) nach einem der Ansprüche 1 bis 4, wobei der Prozessor (120) enthält:
einen Videoprozessor (121), der zum Verarbeiten des Videoinhalts konfiguriert ist; und
eine Grafikverarbeitungseinheit, GPU (graphics processing unit), (122), die zum Verarbeiten der Vielzahl von Grafikobjekten konfiguriert ist.

6. Anzeigevorrichtung (100) nach einem der Ansprüche 1 bis 5, wobei der Prozessor (120) die Anzeige (110) steuert, um das Ausgabebild (35) anzuzeigen, in dem der Videoinhalt in ersten Regionen enthalten ist und mindestens ein Grafikobjekt in verbleibenden Bereichen enthalten ist, die nicht die ersten Bereiche sind.

7. Anzeigevorrichtung nach Anspruch 6, wobei der Prozessor (120) die Anzeige (110) steuert, um das Ausgabebild (35), in dem ein Grafikobjekt, das zu dem ersten Grafikbild gehört, in den verbleibenden Bereichen enthalten ist, und ein Grafikobjekt, das zu dem zweiten Grafikbild gehört, in mindestens einem der ersten Bereiche oder der verbleibenden Bereichen enthalten ist, anzuzeigen.

8. Anzeigevorrichtung (100) nach Anspruch 7, wobei der Prozessor (120) dazu konfiguriert ist, das Ausgabebild (35) durch Hochskalieren eines Alpha-Werts, der dem zweiten Grafikbild entspricht, das die zweite Auflösung aufweist, und Alpha-Blending des ersten Grafikbilds, des Videobilds (31) und des hochskalierten zweiten Grafikbilds auf der Grundlage des hochskalierten Alpha-Werts zu erhalten.

9. Anzeigevorrichtung (100) nach einem der Ansprüche 7 bis 8, wobei der Prozessor (120) enthält:
eine GPU (122), die dazu konfiguriert ist, das zweite Grafikbild, das die zweite Auflösung aufweist, zu verarbeiten;
einen ersten Mischer (124), der dazu konfiguriert ist, in ein erstes gemischtes Bild das hochskalierte zweite Grafikbild, das die zweite Auflösung aufweist, mit dem Videobild (31) zu mischen;
einen Decoder (125), der dazu konfiguriert ist, das erste Grafikbild, das die erste Auflösung aufweist, zu decodieren; und
einen zweiten Mischer (127), der dazu konfiguriert ist, das decodierte Grafikbild, das die erste Auflösung aufweist, mit dem ersten gemischten Bild, das durch den ersten Mischer (124) gemischt wurde, zu mischen.

10. Anzeigevorrichtung (100) nach einem der Ansprüche 1 bis 9, wobei das Ausgabebild (35) ein hochauflösendes Bild eines 4K- oder 8K-Bildes oder mehr ist.

11. Steuerungsverfahren einer Anzeigevorrichtung (100), wobei das Steuerungsverfahren umfasst:
Erhalten (S810) eines Videobildes (31) durch Verarbeiten von eingegebenem Videoinhalt;
Erhalten (S820) einer Vielzahl von Grafikbildern, die jedes einer Vielzahl von Grafikobjekten enthalten, durch paralleles Verarbeiten jedes der Vielzahl von Grafikobjekten; und
Anzeigen (S830) eines Ausgabebilds (35), das den Videoinhalt und die Vielzahl von Grafikobjekten enthält, basierend auf dem erhaltenen Videobild (31) und der erhaltenen Vielzahl von Grafikbildern,
**dadurch gekennzeichnet, dass**
das Erhalten der Vielzahl von Grafikbildern umfasst:
Schreiben eines ersten Grafikbildes, das eine erste Auflösung aufweist, in einen Speicher (130) mit einer Frequenz, die niedriger als eine Ausgabefrequenz der Anzeige (110) ist, wobei das erste Grafikbild ein Hintergrundbild ist,
Schreiben eines zweiten Grafikbildes, das eine zweite Auflösung aufweist, die niedriger als die erste Auflösung ist, in den Speicher (130) mit einer identischen Frequenz wie die Ausgabefrequenz der Anzeige,
Lesen des ersten und des zweiten Grafikbildes aus dem Speicher (13) mit einer identischen Frequenz wie die Ausgabefrequenz der Anzeige (110) und
Hochskalieren des zweiten Grafikbilds, um seine Auflösung von der zweiten Auflösung auf die erste Auflösung zu erhöhen, sodass das erhaltene erste Grafikbild und das zweite Grafikbild beide die erste Auflösung aufweisen.

12. Steuerungsverfahren nach Anspruch 11, wobei beim Anzeigen des Ausgabebildes (35) das Ausgabebild (35) durch Alpha-Blending des Videobilds (31) und der Vielzahl von Grafikbildern basierend auf einem Alpha-Wert, der jedem von der Vielzahl von Grafikbildern entspricht, erhalten wird.

13. Steuerungsverfahren nach Anspruch 11 oder 12, wobei die Anzeigevorrichtung (100) als eine modulare Anzeigevorrichtung (100) implementiert ist, in der eine Vielzahl von Anzeigemodulen verbunden sind, und
eine Auflösung der Anzeigevorrichtung (100) gemäß einer Anzahl der Vielzahl von Anzeigemodulen verändert wird.

14. Steuerungsverfahren nach einem der Ansprüche 11 bis 13, wobei bei dem Erhalten der Vielzahl von Grafikbildern die Vielzahl von Grafikbildern durch paralleles Rendern jedes der Vielzahl von Grafikobjekten oder paralleles Dekodieren eines komprimierten Bildes, das jedes der Vielzahl von Grafikobjekten enthält, erhalten wird.

## Revendications

1. Dispositif d'affichage (100), comprenant :
un afficheur (110) ;
une mémoire (130) ; et
un processeur (120) configuré pour commander à l'afficheur (110) d'afficher une image de sortie (35) comprenant un contenu vidéo et une pluralité d'objets graphiques, ledit processeur (120) étant configuré pour : obtenir une image vidéo (31) par le traitement d'un contenu vidéo d'entrée, obtenir une pluralité d'images graphiques comprenant chacun de la pluralité d'objets graphiques par le traitement de chacun de la pluralité d'objets graphiques en parallèle, et
obtenir l'image de sortie (35) par le mélange de l'image vidéo obtenue (31) et de la pluralité d'images graphiques obtenue, **caractérisé en ce que** le processeur est configuré pour obtenir la pluralité d'images graphiques par :
l'écriture d'une première image graphique (34) possédant une première résolution, dans la mémoire (130) à une fréquence inférieure à une fréquence de sortie de l'afficheur (110), la première image graphique étant une image de fond, l'écriture d'une seconde image graphique (32) possédant une seconde résolution inférieure à la première résolution, dans la mémoire (130) à une même fréquence que la fréquence de sortie de l'afficheur, la lecture des première et seconde images graphiques à partir de la mémoire (13) à une même fréquence que la fréquence de sortie de l'afficheur (110), et la mise à l'échelle de la seconde image graphique pour augmenter sa résolution de la seconde résolution à la première résolution de sorte que la première image graphique et la seconde image graphique obtenues aient toutes deux la première résolution.

2. Dispositif d'affichage (100) selon la revendication 1, ledit processeur (120) étant configuré pour obtenir l'image de sortie (35) par simulation de transparence de l'image vidéo (31) et de la pluralité d'images graphiques sur la base d'une valeur alpha correspondant à chacune de la pluralité d'images graphiques.

3. Dispositif d'affichage (100) selon la revendication 1 ou 2, ledit afficheur (110) étant mis en œuvre sous la forme d'un afficheur modulaire dans lequel une pluralité de modules d'affichage sont connectés, et une résolution de l'afficheur (110) étant modifiée selon une nombre de la pluralité de modules d'affichage.

4. Dispositif d'affichage (100) selon l'une quelconque des revendications 1 à 3, ledit processeur (120) étant configuré pour obtenir la pluralité d'images graphiques par le rendu de chacun de la pluralité d'objets graphiques en parallèle ou par le décodage d'une image compressée comprenant chacun de la pluralité d'objets graphiques en parallèle.

5. Dispositif d'affichage (100) selon l'une quelconque des revendications 1 à 4, ledit processeur (120) comprenant :
un processeur vidéo (121) configuré pour traiter le contenu vidéo ; et
une unité de traitement graphique, GPU, (122) configurée pour traiter la pluralité d'objets graphiques.

6. Dispositif d'affichage (100) selon l'une quelconque des revendications 1 à 5, ledit processeur (120) commandant à l'afficheur (110) d'afficher l'image de sortie (35) dans laquelle le contenu vidéo est compris dans des premières zones et au moins un objet graphique est compris dans les zones restantes qui ne sont pas les premières zones.

7. Dispositif d'affichage selon la revendication 6, ledit processeur (120) commandant à l'afficheur (110) d'afficher l'image de sortie (35) dans laquelle un objet graphique appartenant à la première image graphique est compris dans les zones restantes, et un objet graphique appartenant à la seconde image graphique est compris dans au moins l'une des premières zones ou des zones restantes.

8. Dispositif d'affichage (100) selon la revendication 7, ledit processeur (120) étant configuré pour obtenir l'image de sortie (35) par la mise à l'échelle d'une valeur alpha correspondant à la seconde image graphique possédant la seconde
résolution, et par simulation de transparence a de la première image graphique, de l'image vidéo (31) et de la seconde image graphique mise à l'échelle sur la base de la valeur alpha mise à l'échelle.

9. Dispositif d'affichage (100) selon l'une quelconque des revendications 7 à 8, ledit processeur (120) comprenant :
un GPU (122) configuré pour traiter la seconde image graphique possédant la seconde résolution ;
un premier mélangeur (124) configuré pour mélanger dans une première image mélangée la seconde image graphique mise à l'échelle possédant la seconde résolution avec l'image vidéo (31) ;
un décodeur (125) configuré pour décoder la première image graphique possédant la première résolution ; et
un second mélangeur (127) configuré pour mélanger l'image graphique décodée possédant la première résolution avec ladite première image mélangée qui est mélangée par le premier mélangeur (124).

10. Dispositif d'affichage (100) selon l'une quelconque des revendications 1 à 9, ladite image de sortie (35) étant une image haute résolution d'image 4K ou 8K ou plus.

11. Procédé de commande d'un dispositif d'affichage (100), le procédé de commande comprenant :
l'obtention (S810) d'une image vidéo (31) par le traitement d'un contenu vidéo d'entrée ;
l'obtention (S820) d'une pluralité d'images graphiques comprenant chacun d'une pluralité d'objets graphiques par le traitement de chacun de la pluralité d'objets graphiques en parallèle ; et
l'affichage (S830) d'une image de sortie (35) comprenant le contenu vidéo et la pluralité d'objets graphiques sur la base de l'image vidéo obtenue (31) et de la pluralité d'images graphiques obtenue,
**caractérisé en ce que**
l'obtention de la pluralité d'images graphiques comprend :
l'écriture d'une première image graphique, possédant une première résolution, dans une mémoire (130) à une fréquence inférieure à une fréquence de sortie du dispositif d'affichage (110), la première image graphique étant une image de fond,
l'écriture d'une seconde image graphique, possédant une seconde résolution inférieure à la première résolution, dans la mémoire (130) à une même fréquence que la fréquence de sortie de l'afficheur,
la lecture des première et seconde images graphiques à partir de la mémoire (13) à une même fréquence que la fréquence de sortie de l'afficheur (110), et
la mise à l'échelle de la seconde image graphique pour augmenter sa résolution de la seconde résolution à la première résolution de sorte que la première image graphique et la seconde image graphique obtenues aient toutes deux la première résolution.

12. Procédé de commande selon la revendication 11, lors de l'affichage de l'image de sortie (35), ladite image de sortie (35) étant obtenue par simulation de transparence de l'image vidéo (31) et de la pluralité d'images graphiques sur la base d'une valeur alpha correspondant à chacune de la pluralité d'images graphiques.

13. Procédé de commande selon la revendication 11 ou 12, ledit dispositif d'affichage (100) étant mis en œuvre sous la forme d'un dispositif d'affichage modulaire (100) dans lequel une pluralité de modules d'affichage sont connectés, et
une résolution du dispositif d'affichage (100) étant modifiée selon un nombre de la pluralité de modules d'affichage.

14. Procédé de commande selon l'une quelconque des revendications 11 à 13, lors de l'obtention de la pluralité d'images graphiques, ladite pluralité d'images graphiques étant obtenue par le rendue de chaque objet graphique de la pluralité d'objets graphiques en parallèle ou en décodant une image compressée comprenant chaque objet graphique de la pluralité d'objets graphiques en parallèle.
